# EUROPEAN PATENT APPLICATION

(11) **EP 4 694 234 A1**
(43) Date of publication of application: **11.02.2026**
(21) Application number: 25163980.3
(22) Date of filing: 14.03.2025
(51) Int. Cl.: H04W 4/80, G06Q 20/32

(54) **NFC-BASED SERVICE EXECUTION METHODS AND APPARATUSES AND DEVICES**

(30) Priority: 05.08.2024 CN 202411067880
(71) Applicant: Advanced Nova Technologies (Singapore) Holding Pte. Ltd., Singapore 189773 (SG)
(72) Inventor: WANG, Defu, Singapore, 189773 (CN); ZHAO, Mingbin, Singapore, 189773 (CN); XU, Qifeng, Singapore, 189773 (CN)
(74) Representative: Fish & Richardson P.C.

(57) **Abstract**

One or more embodiments of this specification disclose NFC-based service execution methods and apparatuses and devices. This solution can include: An operating system acquires, based on a near field communication way, a uniform resource URL from an NFC tag device, determines a target application based on domain name information in the URL, and starts the target application, so that the target application performs a service process corresponding to the URL. The URL includes protocol type information representing that the URL conforms to a hypertext transfer protocol secure, the domain name information, and light application card information used to be recognized by an iOS operating system in a light application card way.

## Description

### TECHNICAL FIELD

This application relates to the field of wireless communication service processing technologies, and in particular, to NFC-based service execution methods and apparatuses and devices.

### BACKGROUND

Near field communication (NFC), with advantages of convenience, security, and low power consumption, is widely used in various fields. However, in some special scenarios, during NFC-based service execution, there is a case in which a service cannot be successfully executed. For example, for a terminal device in which an iOS operating system is run, the terminal device in a lock screen state cannot implement execution of an App calling task based on the NFC.

Therefore, how to improve a success rate of the NFC-based service execution has become a technical problem to be urgently resolved.

### SUMMARY

One or more embodiments of this specification provide NFC-based service execution methods and apparatuses and devices, to improve a success rate of NFC-based service execution.

To resolve the above-mentioned technical problem, one or more embodiments of this specification are implemented as such:
One or more embodiments of this specification provide an NFC-based service execution method, applied to a user terminal device and including: An operating system acquires, in a near field communication way, a uniform resource locator URL provided by an NFC tag device, where the URL includes protocol type information, domain name information, and a light application card parameter, the protocol type information represents that the URL conforms to a hypertext transfer protocol secure, and the light application card parameter is used to be recognized by an iOS operating system in a light application card way; and starts an application corresponding to the domain name information, where the application is configured to execute a service process corresponding to the URL.

One or more embodiments of this specification provide an NFC-based service execution method, applied to an NFC tag device and including: receiving a near field communication signal transmitted by a user terminal device; and in response to the near field communication signal, sending a uniform resource locator URL to the user terminal device in a near field communication way, where the URL includes protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, where the application is used to execute a service process corresponding to the URL.

One or more embodiments of this specification provide an NFC-based service execution apparatus, applied to a user terminal device and including: a URL acquisition module, configured to acquire, in a near field communication way, a uniform resource locator URL provided by an NFC tag device, where the URL includes protocol type information, domain name information, and a light application card parameter, the protocol type information represents that the URL conforms to a hypertext transfer protocol secure, and the light application card parameter is used to be recognized by an iOS operating system in a light application card way; and an application start module, configured to start an application corresponding to the domain name information, where the application is used to execute a service process corresponding to the URL.

One or more embodiments of this specification provide an NFC-based service execution apparatus, applied to an NFC tag device and including: a signal receiving module, configured to receive a near field communication signal transmitted by a user terminal device; and an information sending module, configured to: in response to the near field communication signal, send a uniform resource locator URL to the user terminal device in a near field communication way, where the URL includes protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, where the application is used to execute a service process corresponding to the URL.

One or more embodiments of this specification provide a user terminal device, including: at least one processor; and a memory communicatively connected to the at least one processor.
The memory stores instructions that can be executed by the at least one processor, and the instructions are executed by the at least one processor, so that the at least one processor can: acquire, in a near field communication way, a uniform resource locator URL provided by an NFC tag device, where the URL includes protocol type information, domain name information, and a light application card parameter, the protocol type information represents that the URL conforms to a hypertext transfer protocol secure, and the light application card parameter is used to be recognized by an iOS operating system in a light application card way; and start an application corresponding to the domain name information, where the application is configured to execute a service process corresponding to the URL.

One or more embodiments of this specification provide an NFC tag device, including: at least one processor; and a memory communicatively connected to the at least one processor. The memory stores instructions that can be executed by the at least one processor, and the instructions are executed by the at least one processor, so that the at least one processor can: receive a near field communication signal transmitted by a user terminal device; and in response to the near field communication signal, send a uniform resource locator URL to the user terminal device in a near field communication way, where the URL includes protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, where the application is used to execute a service process corresponding to the URL.

At least one embodiment of this specification can achieve the following beneficial effects:The URL transmitted based on the near field communication way includes the protocol type information that conforms to the hypertext transfer protocol secure, and includes the light application card parameter that can be used to be recognized by the iOS operating system by using the light application card way, so that the URL transmitted based on the near field communication way can be recognized by numerous operating systems that include but are not limited to the iOS operating system, and an App calling success rate of a device of each operating system can be greatly improved on a basis that the URL can be identified by the numerous operating systems, thereby further improving a success rate of execution of a service.

### BRIEF DESCRIPTION OF DRAWINGS

To describe the technical solutions in one or more embodiments of this specification or a conventional technology more clearly, the following briefly describes the accompanying drawings needed for describing the one or more embodiments or the conventional technology. Clearly, the accompanying drawings in the following description show merely some embodiments of this application, and a person of ordinary skill in the art can still derive other accompanying drawings from these accompanying drawings without creative efforts.
FIG. 1 is a schematic diagram illustrating an application scenario of an NFC-based service execution method, according to one or more embodiments of this specification;
FIG. 2 is a schematic flowchart illustrating an NFC-based service execution method, according to one or more embodiments of this specification;
FIG. 3 is a schematic structural diagram illustrating a URL, according to one or more embodiments of this specification;
FIG. 4 is a schematic diagram illustrating a case in which a target application is started, according to one or more embodiments of this specification;
FIG. 5 is a schematic diagram illustrating a first predetermined page, according to one or more embodiments of this specification;
FIG. 6 is a schematic diagram illustrating a display page that includes a banner page element, according to one or more embodiments of this specification;
FIG. 7 is a schematic diagram illustrating a light application card, according to one or more embodiments of this specification;
FIG. 8 is a schematic diagram illustrating a light application page, according to one or more embodiments of this specification;
FIG. 9 is a schematic flowchart illustrating another NFC-based service execution method, according to one or more embodiments of this specification;
FIG. 10 is a schematic swimlane flowchart illustrating the NFC-based service execution methods corresponding to FIG. 2 and FIG. 9, according to one or more embodiments of this specification;
FIG. 11 is another schematic swimlane flowchart illustrating the NFC-based service execution methods corresponding to FIG. 2 and FIG. 9, according to one or more embodiments of this specification;
FIG. 12 is a schematic structural diagram illustrating an NFC-based service execution apparatus corresponding to FIG. 2, according to one or more embodiments of this specification;
FIG. 13 is a schematic structural diagram illustrating an NFC-based service execution apparatus corresponding to FIG. 9, according to one or more embodiments of this specification;
FIG. 14 is a schematic structural diagram illustrating an NFC-based service execution device corresponding to FIG. 2, according to one or more embodiments of this specification; and
FIG. 15 is a schematic structural diagram illustrating an NFC-based service execution device corresponding to FIG. 9, according to one or more embodiments of this specification.

### DESCRIPTION OF EMBODIMENTS

To make the objectives, technical solutions, and advantages of one or more embodiments of this specification clearer, the following clearly and fully describes the technical solutions in one or more embodiments of this specification with reference to specific embodiments of this specification and corresponding accompanying drawings. Clearly, the described embodiments are merely some but not all of embodiments of this specification. All other embodiments obtained by a person of ordinary skill in the art based on the embodiments of this specification without creative efforts shall fall within the protection scope of one or more embodiments of this specification.

To facilitate understanding of the technical solutions in one or more embodiments of this specification, some nouns are described:
NFC: Short-range wireless communication technology that allows data exchange between devices that support NFC, where the NFC technology is based on a radio frequency identification (RFID) technology and operates at a frequency of 13.56 MHz, with a communication distance usually within 10 centimeters.

URL: Uniform resource locator (URL), a standardized address format used to identify a location of a resource on the Internet, where each part of the URL provides information about how to access the resource, including a protocol used, a host in which the resource is located, a path, and a query parameter.

App calling: This refers to waking up an application of a mobile end or bringing the application into an active state through a certain trigger mechanism.

Programming: This refers to a process of writing software, firmware, or data to a storage medium in an electronic device or a machine.

In a conventional technology, when an application at a mobile end is waken up based on the NFC technology, App calling is usually performed based on a conventional URL protocol. The conventional URL protocol can be Alipay, Alipays, or another type of protocol. However, during App calling based on the conventional URL protocol, when an operating system at the mobile end is an iOS system, if the mobile end is in a lock screen state or the mobile end is unlocked within two seconds, due to a protection mechanism included by the iOS operating system, the conventional URL protocol cannot be recognized by the mobile end, resulting in a failure of an App calling task for the application at the mobile end. Consequently, a success rate of App calling performed on the application at the mobile end by using the NFC technology is low in an existing technology.

The following describes in detail the technical solutions provided in the embodiments of this specification with reference to the accompanying drawings.

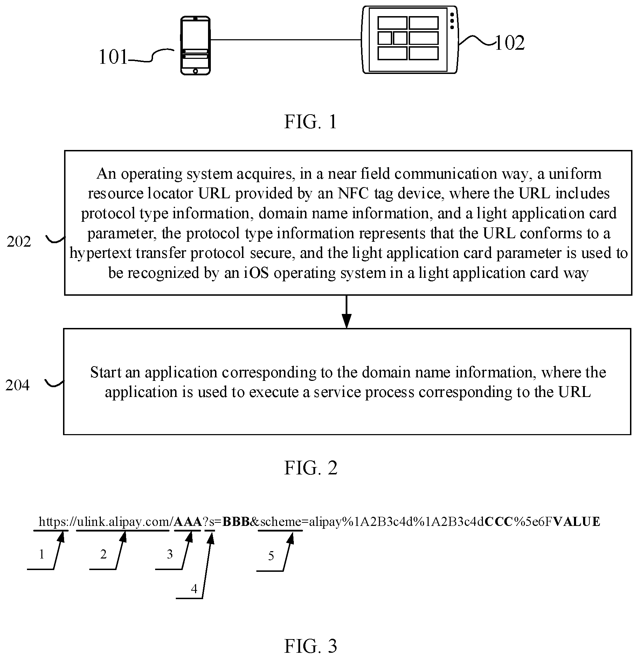

FIG. 1 is a schematic diagram illustrating an application scenario of an NFC-based service execution method, according to one or more embodiments of this specification.

As shown in FIG. 1, the schematic diagram of the application scenario includes an initiation device 101 and a target device 102.

In one or more embodiments of this specification, initiation devices are devices that actively start communication and are responsible for generating radio frequency fields and initiating NFC communication processes. The initiation devices can include but are not limited to a smartphone, a tablet computer, a notebook computer, a desktop computer, an intelligent interaction device, or another device that can actively send an NFC signal, and the initiation device 101 is any one of the initiation devices.

Target devices are passive response devices that respond to requests from the initiation devices and exchange data. The target devices can include but are not limited to an NFC tag, a smart card, an access card, a payment terminal, or another smart device, and the target device 102 is any one of the target devices.

The initiation devices interact with the target devices by sending commands and data, and the target devices perform energy supply and data transmission based on the radio frequency fields generated by the initiation devices.

FIG. 2 is a schematic flowchart illustrating an NFC-based service execution method, according to one or more embodiments of this specification. From a software perspective, the process can be performed by a program or an application client device installed on a user terminal device that has an NFC function. From a hardware perspective, the process can be performed by the user terminal device that has the NFC function.

As shown in FIG. 2, the method can include the following steps.

Step 202: An operating system acquires, in a near field communication way, a uniform resource locator URL provided by an NFC tag device, where the URL includes protocol type information, domain name information, and a light application card parameter, the protocol type information represents that the URL conforms to a hypertext transfer protocol secure, and the light application card parameter is used to be recognized by an iOS operating system in a light application card way.

In one or more embodiments of this specification, the operating system can be any one of an Android operating system, a HarmonyOS operating system, or an iOS operating system; or the operating system can be any one of operating systems running on devices that have an NFC function, and there is no specific limitation on a type of the operating system.

In one or more embodiments of this specification, terminal devices on which the operating system is located can hereafter be collectively referred to as a user terminal device. A communication connection is established between the user terminal device and the NFC tag device by using the near field communication way, and the NFC tag device sends the URL to the user terminal device based on the established communication connection. The URL can be a URL prestored by a developer on the NFC tag device or a URL generated in real time in response to a request from an actual operator.

In one or more embodiments of this specification, the URL can include protocol type information, domain name information, path information, query parameter information, etc. A protocol in the URL can be a hypertext transfer protocol (HTTP) or can be a hypertext transfer protocol secure (HTTPS). The domain name information is used to determine applications that correspond to the URL. The applications that correspond to the URL are hereafter collectively referred to as the target application.

To facilitate understanding of this solution by a person skilled in the art, a specific instance for the URL is provided in one or more embodiments of this specification.

As shown in FIG. 3, the URL includes 1-protocol header https, 2-domain name ulink.alipay.com, 3-path AAA, 4-first query parameter s=BBB, and 5-second query parameter scheme=alipay%1A2B3c4d%1A2B3c4dCCC%5e6FVALUE.

Further, in service parameter information corresponding to the second query parameter, "CCC" can represent scenario type information included at a specified location of the URL; and "VALUE" can represent an information identifier included at a specified location of the URL or can represent a combination of the information identifier and amount information that are included at the specified location of the URL. Information other than "CCC" and "VALUE" in the service parameter information is specified format information, and an application that receives the URL can extract "CCC" and "VALUE" based on recognition of the format information.

In an example of the URL, AAA, BBB, CCC, and VALUE are merely schematic symbols used to indicate locations of corresponding information. In practice, AAA, BBB, CCC, and VALUE in the URL can be actual strings. For example, in a specific example "https://ulink. alipay. com/snxxx?s=nfc&scheme=alipay%1A2B3c4d%1A2B3c4dsn%5e6F1q2w3 e4r5t6y7u8i" of the URL, a string "snxxx" corresponds to the path "AAA" in the example of FIG. 3, a string "nfc" corresponds to the value "BBB" of the first query parameter s in the example of FIG. 3, a string "sn" corresponds to the scenario type information "CCC" in the example of FIG. 3, and a string "1q2w3e4r5t6y7u8i" corresponds to the information identifier "VALUE" in the example of FIG. 3.

In addition, in practice, the domain name ulink.alipay.com, the parameter name s of the first query parameter, the parameter name scheme of the second query parameter, the format information in the service parameter information corresponding to the second query parameter, and an entire structure of the URL can be predetermined information not to be changed for a certain period of time, and do not change from one communication to another, so that a plurality of ends such as an operating system, an operating system server, an application program, and an application server can recognize and perform information processing on the received URL based on a predetermined setting. Certainly, the foregoing agreed information can alternatively be changed in a process of software update, program upgrade, etc. For example, the domain name can be changed from ulink.alipay.com to render.alipay.com, and when the change is made, synchronous update needs to be performed in ends that need to consume this information in the plurality of ends such as the operating system, the operating system server, the application program, and the application server.

In one or more embodiments of this specification, operating systems of an iOS version 14 and above have a light application function that allows a user to quickly use an application without downloading and installing a full application program, that is, a light application function that runs on the operating systems. Therefore, to adapt to the light application function of the iOS version 14 and above, the URL transmitted based on the NFC way can include the light application card parameter used to be recognized by the iOS operating system by using the light application card way, so that the iOS operating system can trigger the light application function of the iOS operating system after recognizing the light application card parameter in the URL, and further display a corresponding light application card based on the light application function, thereby improving a success rate of App calling in the iOS operating system.

Optionally, the light application card parameter can be included in the path information of the URL.

Step 204: Start an application corresponding to the domain name information, where the application is used to execute a service process corresponding to the URL.

In one or more embodiments of this specification, the operating system can start the target application based on the acquired URL if the target application is already installed in the operating system, so that the started target application performs the corresponding service process based on the query parameter information in the URL. If the target application is not installed in the operating system, the operating system can open an application page corresponding to the URL, so that the user can complete a subsequent service process based on information displayed on the opened application page.

It should be understood that a sequence of some of the steps of the method described in one or more embodiments of this specification can be interchanged based on actual needs, or some of the steps thereof can be omitted or deleted.

In the method in FIG. 2, the URL transmitted based on the NFC can also be recognized by the iOS operating system on a basis of being recognized by the Android system and the HarmonyOS system, so that App calling can also be successfully performed in a device with the iOS operating system in a scenario in which App calling is performed based on the NFC, thereby improving an overall success rate of App calling across user devices while significantly increasing a success rate of App calling in the device with the iOS operating system.

Based on the method in FIG. 2, one or more embodiments of this specification further provide some specific implementations of the method, as described below.

In one or more embodiments of this specification, one or more embodiments are provided for a process in which an operating system performs App calling based on a URL.

Optionally, in one or more embodiments of this specification, the starting an application corresponding to the domain name information can specifically include: determining the application corresponding to the URL based on the domain name information; determining whether the application is already installed in the operating system, to obtain a determining result; and starting the application if the determining result represents that the application is already installed in the operating system.

In one or more embodiments of this specification, the domain name information can be information designed by a developer of an application program for determining a corresponding application. In addition, the domain name information corresponding to the application can be correspondingly registered in advance in the World Wide Web. Therefore, the corresponding application can be determined based on the domain name information.

In one or more embodiments of this specification, after acquiring the URL sent by the NFC tag device, the operating system can determine, based on the domain name information in the URL, the target application corresponding to the URL. The operating system determines whether the target application is already installed in the operating system based on the determined target application and various applications already installed in the operating system, and starts the target application if determining that the target application is already installed in the operating system.

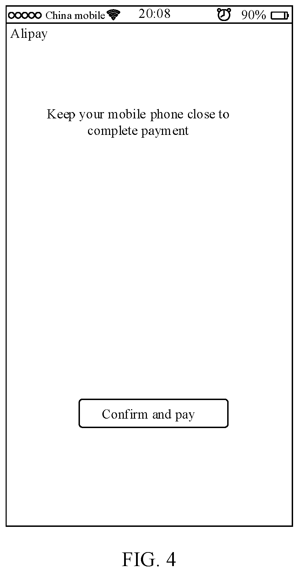

Optionally, for example, the target application is Alipay. For a payment scenario, a page obtained after the target application is enabled can be shown in FIG. 4. Information shown in FIG. 4 is only an example. In practice, information different from the information shown in FIG. 4 can be displayed. Specifically, information such as other text, pictures, moving pictures, and controls can be displayed, and there is no specific limitation on the information shown in FIG. 4.

In one or more embodiments of this specification, if determining that the target application is not installed in the operating system, the operating system can display a corresponding page corresponding to the URL. Optionally, after the determining whether the application is already installed in the operating system, to obtain a determining result, the method can further include: acquiring, from an application server of the application based on the URL if the determining result represents that the application is not installed in the operating system, first predetermined page information corresponding to the URL; and displaying a first predetermined page generated based on the first predetermined page information, where the first predetermined page includes a first download control used to provide a prompt indicating the user to download the application.

In one or more embodiments of this specification, the URL acquired by the operating system can be a resource address used to identify and locate a resource. Therefore, after it is determined that the target application is not installed in the operating system, the first predetermined page information corresponding to the URL can be acquired from the server of the target application based on the URL, and the corresponding first predetermined page can be generated based on the first predetermined page information. The first predetermined page information includes all information for generating the first predetermined page, for example, can include, but is not limited to, picture information, title information, subtitle information, control information, etc. The first predetermined page can include the first download control, and a download and installation process for the target application can be triggered after the user performs a trigger operation on the first download control.

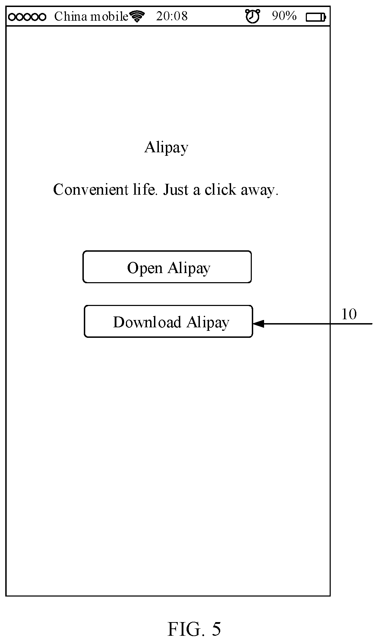

Optionally, for example, the target application is Alipay. The generated first predetermined page can be as shown in FIG. 5. In FIG. 5, a first download control 10 is a "Download Alipay" control. Information shown in FIG. 5 is only an example. In practice, information different from the information shown in FIG. 5 can be displayed. Specifically, information such as other text, pictures, moving pictures, and controls can be displayed, and there is no specific limitation on the information shown in FIG. 5.

In one or more embodiments of this specification, after it is determined that the target application is already installed in the operating system, the target application can be directly started to enhance user experience; or when it is determined that the target application is not installed in the operating system, the first predetermined page used to provide the prompt indicating the user to download the target application can be displayed to the user, to enhance an amount of user usage for the target application.

To enhance the user experience, after acquiring the URL at the NFC tag device based on the NFC way, the operating system can pre-generate prompt information used to provide a prompt indicating to the user whether the user needs to access the target application, so that the target application can be started only after authorization from the user is acquired, thereby avoiding disturbance to the user when the user does not need to open the target application.

Optionally, after the determining whether the application is already installed in the operating system, the method can further include: displaying a banner page element, where the banner page element includes information used to provide a prompt indicating to access the application; and acquiring a first trigger operation of the user on the banner page element.

The determining whether the application is already installed in the operating system can specifically include: in response to the first trigger operation, determining whether the application is already installed in the operating system.

In one or more embodiments of this specification, after determining the target application based on the domain name information in the URL, the operating system can display the banner page element in a current interface in which the operating system runs, where the banner page element can include the prompt information used to provide the prompt indicating to the user whether the user needs to access the application program. The banner page element can be displayed in any area of a top area, a bottom area, and a middle area of a visible area in the current interface, or the banner page element can be displayed in any area of the visible area in the current interface, and there is no specific limitation on a display position of the banner page element.

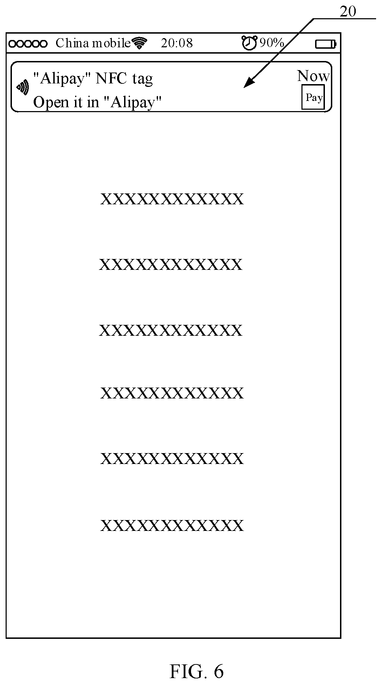

Optionally, for example, the target application is Alipay. The display page including the banner page element can be as shown in FIG. 6. A banner page element 20 is located in a top area of a visual area in FIG. 6. Information shown in FIG. 6 is only an example. In practice, information different from the information shown in FIG. 6 can be displayed. Specifically, information such as other text, pictures, moving pictures, and controls can be displayed, and there is no specific limitation on the information shown in FIG. 6.

In one or more embodiments of this specification, if the operating system acquires the first trigger operation of the user on the banner page element within predetermined time, the first trigger operation can be a click operation of the user on a predetermined control in the banner page element or can be a click operation of the user on a random position of the banner page element. In response to the first trigger operation of the user, a process of determining whether the target application is already installed in the operating system is performed, and if it is determined that the target application is already installed in the operating system, the target application is started; or if it is determined that the target application is not installed in the operating system, a target page is displayed for providing a prompt indicating the user to download the target application.

In one or more embodiments of this specification, the display of the banner page element is stopped if the operating system does not acquire the first trigger operation of the user on the banner page element within the predetermined time.

On the basis of the above-mentioned embodiments, in one or more embodiments of this specification, the operating system can include the iOS operating system that has the light application function; and the determining whether the application is already installed in the operating system can further include: acquiring, based on the light application card parameter, light application card information corresponding to the light application card parameter; displaying a light application card generated based on the light application card information, where the light application card includes an application access control, and the application access control is used to provide a prompt indicating the user to access the application; and acquiring a second trigger operation on the application access control.

The determining whether the application is already installed in the operating system can specifically include: in response to the second trigger operation, determining whether the application is already installed in the operating system.

In one or more embodiments of this specification, the operating system can include the IOS operating system that has the light application function, and can be specifically an operating system of an iOS version 14 and above. A light application can be an application program that runs on the operating system and that can be used without being downloaded, for example, an App Clips that runs on the iOS operating system.

In one or more embodiments of this specification, the acquiring light application card information corresponding to the light application card parameter based on the light application card parameter can specifically include: acquiring, based on the light application card parameter, the light application card information corresponding to the light application card parameter from a system server corresponding to the operating system. The light application card information can include picture information, title information, subtitle information, control information, etc. Different service scenarios can correspond to different light application card parameters, and light application card information corresponding to the light application card parameters can be different. For example, a light application card parameter corresponding to a payment scenario is different from a light application card parameter corresponding to a gate opening scenario; and the light application card parameter corresponding to the payment scenario is also different from a light application card parameter corresponding to a service machine water sales business scenario.

In one or more embodiments of this specification, the light application card information can be information pre-registered at the system server corresponding to the operating system by a developer of an application corresponding to the light application card information. For example, for a payment scenario of the target application, if the developer intends to display the payment scenario of the target application as a picture of an interface A, the developer can pre-register information related to the picture of the interface A with the corresponding system server of the operating system, to inform the system server to display the payment scenario of the target application as the picture of the interface A. In addition, the developer also adds a parameter of information related to displaying the payment scenario of the target application as the picture of the interface A in a corresponding URL, so that the operating system can parse out a light application card parameter for the interface A after acquiring the URL, to acquire corresponding light application card information from the system server based on the light application card parameter, further generate a light application card based on the light application card information, and display the light application card to the user, where the light application card can include a title of the target application and the application access control corresponding to the target application. The user can access the corresponding target application through the application access control.

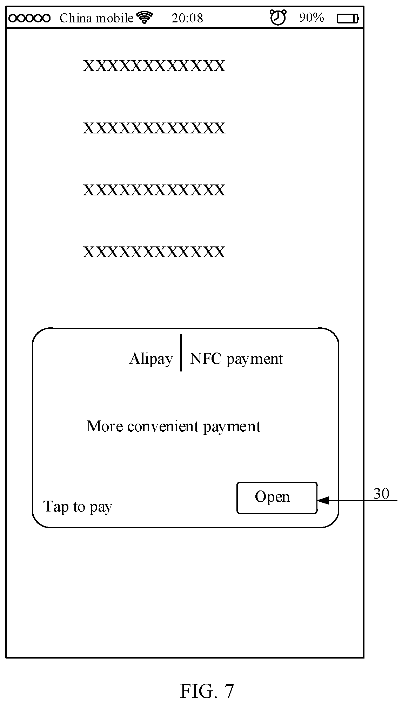

Optionally, for example, the target application is Alipay. The generated light application card for the payment scenario can be as shown in FIG. 7. In FIG. 7, an application access control 30 is an "open" control. Information shown in FIG. 7 is only an example. In practice, information different from the information shown in FIG. 7 can be displayed. Specifically, information such as other text, pictures, moving pictures, and controls can be displayed, and there is no specific limitation on the information shown in FIG. 7.

In one or more embodiments of this specification, if acquiring the second trigger operation of the user on the application access control within predetermined time, in response to the second trigger operation, the operating system performs a process of determining whether the target application is already installed in the operating system, and starts the target application if determining that the target application is already installed in the operating system.

In one or more embodiments of this specification, if not acquiring the second trigger operation of the user on the application access control within predetermined time, the operating system stops displaying the light application card.

Optionally, the URL can also include a light application page parameter; and the determining whether the application is already installed in the operating system can further include: acquiring, based on the light application page parameter if the determining result represents that the application is not installed in the operating system, light application page information corresponding to the light application page parameter; and displaying, in a light application corresponding to the light application card, a light application page generated based on the light application page information, where the light application page includes a second download control used to provide a prompt indicating the user to download the application.

In one or more embodiments of this specification, the light application page parameter can be included in the query parameter information of the URL. Specifically, as shown in FIG. 3, the light application page parameter can be a parameter value corresponding to the first query parameter in the URL, for example, the parameter value corresponding to the parameter s.

In one or more embodiments of this specification, in response to the second trigger operation, a process of determining whether the target application is already installed in the operating system is performed, and if it is determined that the target application is not installed in the operating system, the light application page information corresponding to the light application page parameter is acquired based on the light application page parameter. Specifically, based on the light application page parameter, the light application page information corresponding to the light application page parameter is acquired from the system server corresponding to the operating system. The light application page information can include picture information, title information, subtitle information, control information, etc.

In one or more embodiments of this specification, the light application page information can be information pre-registered at the system server corresponding to the operating system by a developer of an application corresponding to the light application page information.

In one or more embodiments of this specification, the operating system can generate the corresponding light application page based on the acquired light application page information, and display the light application page in the light application corresponding to the light application card. The light application page includes the second download control used to provide the prompt indicating the user to download the target application. A download and installation process for the target application can be triggered after the user clicks on the second download control.

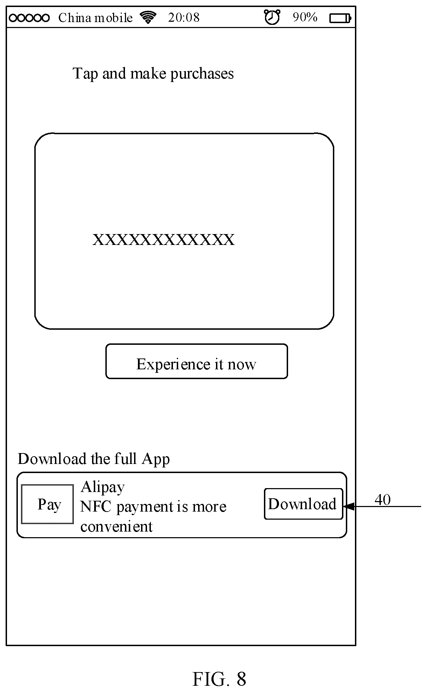

Optionally, for example, the target application is Alipay. The generated light application page can be as shown in FIG. 8. A second download control 40 is a "download" control. Information shown in FIG. 8 is only an example. In practice, information different from the information shown in FIG. 8 can be displayed. Specifically, information such as other text, pictures, moving pictures, and controls can be displayed, and there is no specific limitation on the information shown in FIG. 8.

On a basis of the above-mentioned embodiments, in one or more embodiments of this specification, the light application page can further include a service control used to indicate to execute a service process; and the displaying a light application page generated based on the light application page information can further include: acquiring a third trigger operation of the user on the service control; and highlighting the second download control in response to the third trigger operation.

In one or more embodiments of this specification, the service control can be a control used to provide a prompt indicating the user to make a payment, or can be a control used to provide a prompt indicating the user to experience the target application. After the third trigger operation of the user on the service control is acquired, in response to the third trigger operation, the second download control is highlighted to direct the user to download and install the target application through the second download control, to enhance convenience of downloading and installing the target application by the user, thereby further increasing an amount of user usage of the target application.

In one or more embodiments of this specification, one or more embodiments are also provided for a process in which the target application performs a service based on the URL.

Optionally, after the starting an application corresponding to the domain name information, the method can further include: transmitting the URL to the application, where the URL can further include service parameter information, and the service parameter information is used as a basis used by the application to execute the service process corresponding to the URL.

In one or more embodiments of this specification, the service parameter information can be included in the query parameter information of the URL.

Optionally, as shown in FIG. 3, the service parameter information can be the parameter value corresponding to the second query parameter in the URL, for example, the parameter value corresponding to the parameter scheme.

In one or more embodiments of this specification, after the operating system determines that the target application is already installed in the operating system and starts the target application, the operating system sends the URL to the target application, and the target application performs a subsequent service process based on the service parameter information in the URL.

On a basis of the above-mentioned embodiments, in one or more embodiments of this specification, the service parameter information can include scenario type information and an information identifier corresponding to the scenario type information, and the information identifier is used as a basis for querying service description information.

After the transmitting the URL to the application, the method can further include: querying, by the application based on the scenario type information, a URL template that has a mapping relationship with the scenario type information, where the URL template includes a replaceable mark, and the replaceable mark is used to identify a location in which the information identifier can be entered; replacing the replaceable mark with the information identifier, to obtain a service URL that includes the information identifier; and performing the service process based on the service URL.

In one or more embodiments of this specification, the scenario type information is used to reflect a specific implementation scenario used when a service is performed, and service scenarios can include a payment scenario, a gate opening scenario, a food ordering scenario, a service machine water sales scenario, etc. Optionally, the information identifier can be identification data generated based on service data generated when the service is performed, for example, identification data generated based on an order number or a merchant number. The information identifier can be encrypted identification data, and this setting enhances security of the service data. Optionally, the information identifier can be a random string. In the application server, the generated information identifier and the service description information corresponding to the information identifier can be correspondingly stored so that the service description information can be queried based on the information identifier when the service description information subsequently needs to be used.

In one or more embodiments of this specification, a mapping relationship can be pre-established between the scenario type information and the URL template, and specifically, a mapping relationship in a form of a key-value pair can be established. The scenario type information can be a value of key and the URL template can be a value of value.

To facilitate understanding of this solution by a person skilled in the art, a specific instance of converting the URL to the service URL is provided in one or more embodiments of this specification.

Assume that the URL acquired by the operating system from the NFC tag device is as follows:
https://ulink.alipay.com/snxxx?s=nfc&scheme=alipay% 1 A2B3 c4d% 1 A2B3 c4dsn%5 e6F 1 q2w3e 4r5t6y7u8i.

The service parameter information in the URL is a parameter value corresponding to the parameter scheme; the scenario type information is "sn" in the parameter value corresponding to the parameter scheme; and the information identifier is "1q2w3e4r5t6y7u8i" in the parameter value corresponding to the parameter scheme.

Based on the mapping relationship pre-established between the scenario type information and the URL template, a URL template corresponding to "sn" is identified as follows: alipays://platformapi/startApp?appId=112233&appScheme=NFC_ABC&pageParams=%12345q wert$[value]$%6789. A replaceable mark in the URL template is $[value]$.

A service URL obtained by replacing the replaceable mark $[value]$ in the URL template with the information identifier "1q2w3e4r5t6y7u8i" in the URL is as follows: alipays://platformapi/startApp?appId=112233&appScheme=NFC_ABC&pageParams=%12345q wert1q2w3e4r5t6y7u8i%6789.

In one or more embodiments of this specification, the service URL used to execute the service process can be generated based on the URL transmitted between the user terminal device and the NFC tag device so that there is no need to transmit, between the user terminal device and the NFC tag device, the service URL used to execute the service process. With such a setting, on the one hand, a risk of leakage of the service URL can be avoided and confidentiality of the service URL can be improved; on the other hand, since a data amount of the URL is smaller than a data amount of the service URL, an amount of data transmitted between the user terminal device and the NFC tag device can be further reduced, thereby improving NFC communication efficiency and further improving user experience.

On a basis of the above-mentioned embodiments, in one or more embodiments of this specification, the service URL includes rendering parameter information used to render a first application page, and the information identifier is included in the rendering parameter information; and the performing the service process based on the service URL can specifically include: rendering the first application page based on the rendering parameter information.

In one or more embodiments of this specification, a payment scenario is used as an example. Assume that the service URL after the conversion is as follows: alipays://platformapi/startApp?appId=112233&appScheme=NFC_ABC&pageParams=%12345q wert$1q2w3e4r5t6y7u8i$%6789. The three parameters appid, appscheme, and pageparams in the service URL after the conversion are all rendering parameters, and corresponding parameter values are all the rendering parameter information.

In practice, the first application page can be rendered based on the rendering parameter information in the service URL, and the first application page can be an App calling landing page displayed to the user after the service process is initiated based on the NFC way, and can also be referred to as a first page displayed to a user.

On a basis of the above-mentioned embodiments, in one or more embodiments of this specification, the first application page can include a predetermined control; and the rendering a first application page based on the rendering parameter information can further include: sending a service request to an application server of the application in response to a trigger operation of the user on the predetermined control, where the service request includes the information identifier; receiving service processing result information determined by the application server in response to the service request, where the service processing result information is determined by the application server based on the service description information, and the service description information is obtained through query by the application server based on the information identifier; and displaying a second application page generated based on the service processing result information.

Optionally, the information identifier included in the service URL can be information generated by the application server.

Optionally, the information identifier can be a token (token) obtained by the application server by performing processing based on at least a part of information in the service description information by using a predetermined information processing rule.

Optionally, the information identifier can be a random string generated by the application server.

In practice, after the information identifier is generated, the information identifier can be stored in association with the corresponding service description information, and the information identifier is used as a query index for the service description information.

Optionally, a URL acquisition request can be sent by the NFC tag device to the application server, and then the application server generates the URL and returns the URL to the NFC tag device.

In one or more embodiments of this specification, the first application page can include the predetermined control, where the predetermined control can be any one of an input control, a button control, a selection control, and a multimedia control. If the target application acquires the trigger operation of the user on the predetermined control within predetermined time, the target application sends the service request to the application server of the target application in response to the trigger operation, where the service request includes the information identifier. The application server responds to the service request, analyzes the service request, acquires the information identifier included in the service request, then identifies, by using the information identifier as the query index, the service description information corresponding to the information identifier, further determines the corresponding service processing result information based on the service description information, and sends the service processing result information to the target application. The target application generates the corresponding second application page and displays the second application page after receiving the service processing result information, and displays the second application page.

In one or more embodiments of this specification, the application server can perform process interaction with the target application a plurality of times in a process of determining the service processing result information, for example, a process of decrypting the information identifier in the service URL, a process of verifying identity information of the user by using the target application, a process of verifying legality of the service URL, and a process of verifying security of a service execution environment, and acquires related information that needs to be displayed in the second application page, etc.

In one or more embodiments of this specification, the second application page generated based on the service processing result information can includes a plurality of types of pages. A payment scenario is used as an example. The second application page can be an application page that displays related information such as "The payment is successful". The second application page can alternatively be an application page that displays related information such as a specific payment amount, and if the user has opened a secret payment function, the user can directly click a payment button in the second application page to complete payment; or if the user has not opened the secret payment function, the second application page can redirect to a third application page after the user clicks the payment button in the second application page, and the user can enter a correct password in the third application page to complete the payment. The second application page can alternatively be an application page that displays a corresponding window in which the user needs to enter a payment amount, and if the user has opened a secret payment function, the user can directly click a corresponding payment button after entering the corresponding payment amount in the second application page, to complete payment; or if the user has not opened the secret payment function, after the user enters the corresponding payment amount in the second application page and clicks the payment button corresponding to the payment amount, the second application page can redirect to a fourth application page, and the user enters a correct password in the fourth application page to complete the payment.

Optionally, in the payment scenario, the service parameter information further includes amount information corresponding to the scenario type information; the amount information can be included in the rendering parameter information after being spliced with the information identifier; and the first application page can further include a payment amount corresponding to the amount information.

Specifically, when the service parameter information includes both the information identifier and the amount information, the information identifier and the amount information can be spliced by using a fixed character (for example, _), and then, in a subsequent process of URL conversion, the amount information and the information identifier are both filled into the service URL after the conversion.

In one or more embodiments of this specification, in a payment service scenario, a payment amount can be entered by a merchant to obtain a corresponding information identifier generated based on the payment amount by using a service parameter that includes the amount information, so that the rendering parameter information in the service URL can include the payment amount. The first application page rendered based on the rendering parameter information can include the payment amount entered by the merchant. If the user has opened a secret payment function, the user can directly click a payment button in the first application page to complete payment; or if the user has not opened the secret payment function, the first application page can redirect to a fifth application page after the user clicks the payment button in the first application page, and the user enters a correct password in the fifth application page to complete the payment.

It is worthwhile to note that, in one or more embodiments of this specification, the amount information is included in the service parameter information through plaintext information, and is further included in the service URL, so that when acquiring the service URL, the user terminal device can display the payment amount corresponding to the amount information in the rendered first application page based on the amount information in plaintext in the service URL, in other words, to enable the user to see the amount to be paid in the App calling landing page, thereby improving payment experience of the user. Optionally, the payment amount can be displayed in the first application page when the amount information includes the payment amount. Optionally, when the payment amount is not included in the amount information, for example, only a character (for example, n) used to represent that the payment amount is not provided is included, the payment amount is not displayed in the first application page.

To facilitate understanding of this solution by a person skilled in the art, a specific instance of converting the URL to the service URL when the amount information is included is provided in one or more embodiments of this specification.

Assume that the URL acquired by the operating system from the NFC tag device is as follows:
https://ulink.alipay.com/snxxx?s=nfc&scheme=alipay%1A2B3c4d%1A2B3c4dsn%5e6F1q2w3e 4r5t6y7u8i_0.1.

The service parameter information in the URL is a parameter value corresponding to the parameter scheme; the scenario type information is "sn" in the parameter value corresponding to the parameter scheme; and the information identifier and amount information are "1q2w3e4r5t6y7u8i_0.1" in the parameter value corresponding to the parameter scheme.

Based on the mapping relationship pre-established between the scenario type information and the URL template, a URL template corresponding to "sn" is identified as follows: alipays://platformapi/startApp?appId=112233&appScheme=NFC_ABC&pageParams=%12345q wert$[value]$%6789. A replaceable mark in the URL template is $[value]$.

A service URL obtained by replacing the replaceable mark $[value]$ in the URL template with the information identifier and the amount information"1q2w3e4r5t6y7u8i_0.1" in the URL is as follows: alipays://platformapi/startApp?appId=112233&appScheme=NFC_ABC&pageParams=%12345q wert1q2w3e4r5t6y7u8i_0.1%6789.

In this example, in the first application page in which App calling landing is implemented, an amount of "0.1" to be paid can be displayed to the user.

On a basis of the above-mentioned embodiments, in one or more embodiments of this specification, when querying the URL template based on the scenario type information, there is also a case in which the query fails.

Optionally, after the application queries, based on the scenario type information, the URL template that has the mapping relationship with the scenario type information, the method can further include: acquiring a home page URL of the application if the URL template that has the mapping relationship with the scenario type information is not identified; and displaying a home page of the application based on the home page URL.

In one or more embodiments of this specification, the home page URL of the application can be pre-stored at an application client device, and if the URL template that has the mapping relationship is not identified based on the scenario type information in the service URL, the application can directly display the home page of the application based on the pre-stored home page URL at the client device. Such a setting can enhance a rate of displaying the home page of the application. If the home page URL is not pre-stored at the application client device, when the URL template that has the mapping relationship is not identified, the application can generate an acquisition request used to acquire the home page URL and send the acquisition request to the application server, the application server sends the home page URL to the application client device in response to the acquisition request, and the application displays the home page of the application based on the received home page URL. Such a setting can reduce utilization of storage resources at the application client device.

In one or more embodiments of this specification, when the application cannot parse out specific service information or cannot parse out an application page that needs to be displayed, the home page of the application can be displayed to the user to minimize bad experience of the user on the application.

Optionally, when a scenario represented by the scenario type information is a specified service scenario, the application can access a page corresponding to the specified service URL. Based on this, the service parameter information can include the scenario type information and the specified service URL corresponding to the scenario type information; and after the transmitting the URL to the application, the method can further include: when a value of the scenario type information is a specified parameter, the application acquires, based on the specified service URL, specified page information corresponding to the specified service URL from a specified server corresponding to the specified service URL; and displays a specified page generated based on the specified page information.

In one or more embodiments of this specification, the service parameter information that is in the URL and that is acquired by the operating system from the NFC tag device can include the scenario type information and the specified service URL corresponding to the scenario type information. After acquiring the URL, if determining that the scenario type information in the service parameter information is the specified parameter, the target application does not need to query a URL module that has the mapping relationship with the scenario type information, and can display the specified page determined based on the specified service URL.

In one or more embodiments of this specification, the application corresponding to the specified service URL is an application different from the target application, and the server corresponding to the specified service URL is a server different from the server of the target application. A payment scenario is used as an example. The target application can be Alipay. The application corresponding to the specified service URL can be another application such as an applet application, and the specified page displayed is not a native page of the Alipay and can be another page that is of the applet and that is opened in an application page of the Alipay. The server corresponding to the specified service URL can be a server on a side of a merchant or on another side such as a side of a third party. The specified service URL can be a URL specified by the merchant, and a protocol type of the specified service URL can be any one of http, https, Alipay, or Alipays.

In one or more embodiments of this specification, a specified page of another application can be opened in the target application based on needs of the user so that the user can have more autonomy of choice, thereby enhancing experience of the user on the target application.

Optionally, the application includes a payment application and the service process includes a payment process.

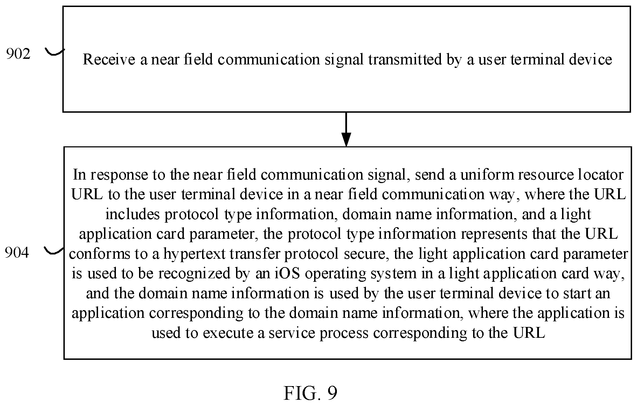

Based on the same idea as the solution shown in FIG. 2, one or more embodiments of this specification further provide another NFC-based service execution method. FIG. 9 is a schematic flowchart illustrating another NFC-based service execution method, according to one or more embodiments of this specification. From a software perspective, the process can be performed by a program or an application client device installed on an NFC tag device. From a hardware perspective, the process can be performed by the NFC tag device. As shown in FIG. 9, the process can include:
Step 902: Receive a near field communication signal transmitted by a user terminal device.

In one or more embodiments of this specification, the user terminal device can be used as an NFC reader, and when the user terminal device is near the NFC tag device, the user terminal device sends an acquisition request to the NFC tag device by using a way of sending a near field communication signal, where the acquisition request is used to request to acquire a URL from the NFC tag device.

Step 904: In response to the near field communication signal, send a uniform resource locator URL to the user terminal device in a near field communication way, where the URL includes protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, where the application is used to execute a service process corresponding to the URL.

In one or more embodiments of this specification, the NFC tag device sends, in response to the near field communication signal, the URL to the user terminal device based on the received near field communication signal by using the near field communication way. The URL can include protocol type information, domain name information, port information, path information, query parameter information, etc. A protocol in the URL can be a hypertext transfer protocol (HTTP) or can be a hypertext transfer protocol secure (HTTPS). The domain name information is used to determine a target application to which the URL corresponds. After started, the target application can perform, based on the URL, the service process corresponding to the URL.

In one or more embodiments of this specification, operating systems of an iOS version 14 and above have a light application function that allows a user to quickly use an application without downloading and installing a full application program, that is, a light application function that runs on the operating systems. Therefore, to adapt to the light application function of the iOS version 14 and above, the URL transmitted based on the NFC way can include the light application card parameter used to be recognized by the iOS operating system by using the light application card way, so that the iOS operating system can trigger the light application function of the iOS operating system after recognizing the light application card parameter in the URL, and further display a corresponding light application card based on the light application function, thereby improving a success rate of App calling in the iOS operating system.

Optionally, the light application card parameter can be included in the path information of the URL.

In one or more embodiments of this specification, methods for acquiring the URL in the NFC tag device can be different for different application scenarios. For example, in some automatic vending scenarios, a URL can usually include fixed information, and therefore the URL including the fixed information can be programmed into the NFC tag device. For another example, in some scenarios, a URL can include service data related to a current service, such as a product order number, a user identifier, and an order amount. Therefore, a corresponding URL can be generated in real time when the service occurs.

In the method in FIG. 9, the URL transmitted based on the NFC can also be recognized by the iOS operating system on a basis of being recognized by the Android system and the HarmonyOS system, so that App calling can also be successfully performed in a device with the iOS operating system in a scenario in which App calling is performed based on the NFC, thereby improving an overall success rate of App calling in a user group device while significantly increasing a success rate of App calling in the device with the iOS operating system.

Based on the method in FIG. 9, one or more embodiments of this specification further provide some specific implementation solutions of the method, as described below.

Optionally, before the receiving a near field communication signal transmitted by a user terminal device, the method can further include: obtaining a predetermined trigger operation; obtaining first service information in response to the trigger operation; sending a URL acquisition request to an application server, where the URL acquisition request includes the first service information; receiving the URL returned by the application server, where the URL includes an information identifier, the information identifier is used to query service description information, the service description information includes the first service information and second service information, and the second service information includes information that is acquired by the application server and that is related to a service that corresponds to the URL.

In one or more embodiments of this specification, predetermined trigger operations can be different for different service scenarios. For example, there can be a payment collection operation initiated by a cashier, a payment collection operation initiated at the end of the sale of water at a service machine, a payment operation initiated by a shopper after selecting an item at a vending machine, a payment operation initiated by a user after making a purchase on an application program corresponding to a merchant, etc.

In one or more embodiments of this specification, a payment scenario is used as an example, and the first service information can include information such as a product order number, a merchant identifier, order generation time, and an order generation location. The second service information can include information such as generation time of the URL, a specific attribute of the URL, a validity time limit of the URL, an identifier of a payment user, and a payment status of the user.

In one or more embodiments of this specification, the information identifier can be a token generated by the application server based on the service description information.

Optionally, the application server can process at least a part of the service description information based on a predetermined information processing rule, to obtain the token. The predefined information processing rule can vary from scenario to scenario. For example, in the payment scenario, the merchant number or the order number can be processed to obtain the token. In a service machine water sales scenario, a serial number (SN) can be spliced with a process identifier (PID), to obtain the token. In a vending machine selling scenario, a vending machine number and a product identifier can be processed to obtain the token.

Optionally, the information identifier corresponding to the service description information can be a random code generated by the server.

In one or more embodiments of this specification, the application server can store the information identifier in association with the service description information so that when the application sends the service request to the application server based on the URL, the application server can identify, based on the information identifier, the service description information including service information, thereby further advancing the service process. Such a setting can improve security of the service information and can make the URL shorter, thereby reducing an amount of data during transmission of the URL.

It is worthwhile to note that for a determined NFC tag device, an information identifier in a URL to be generated can vary, and if the URL to be generated further includes amount information, the amount information can also vary, and other information than the amount information can be fixed. Specifically, information such as protocol type information, domain name information, a light application card parameter, a light application page parameter, and scenario type information in the URL to be generated can be unchanged. In addition, when the URL to be generated includes a specified service URL, the specified service URL can also be unchanged. Only information identifiers and amount information (if any) can be different in URLs sent at different times in URLs sent for all times of near field communication performed for the NFC tag device.

Optionally, the trigger operation can include an initiate payment collection operation, the application can include a payment application, and the service process can include a payment process.

In one or more embodiments of this specification, in a payment service scenario, based on an NFC communication way between a user terminal device and an NFC tag device, payment can be completed by a touch-and-go operation between the devices, to facilitate smooth payment for the disabilities that use a smartphone, such as the elderly, without the need for the user to operate the smartphone, for example, without the need for the user to open a code-sweeping apparatus to scan a two-dimensional code of a merchant, so that it is more convenient for the user to pay, thereby improving user experience in a payment process and further enhancing stickiness of the user to a target application.

Schematic swimlane flowcharts illustrating the NFC-based service execution methods corresponding to FIG. 2 and FIG. 9 are further provided in one or more embodiments of this specification.

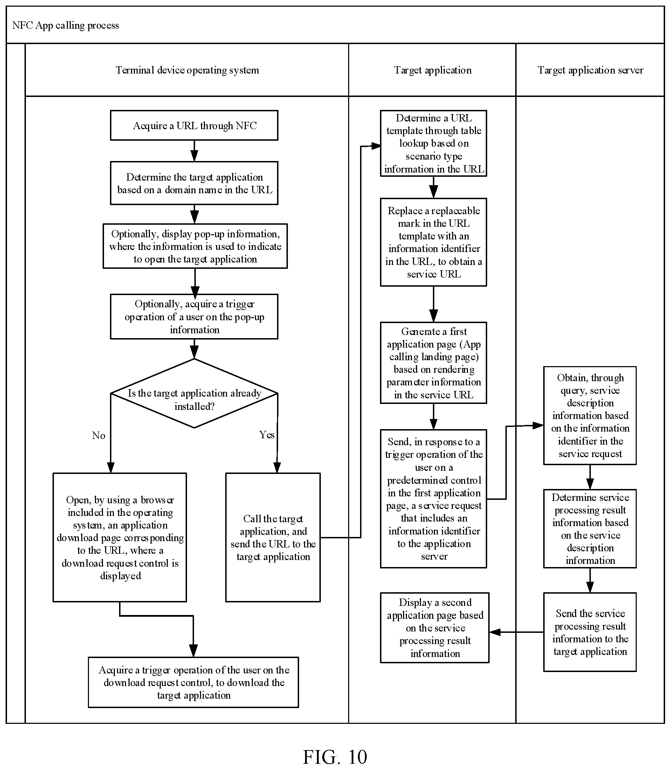

As shown in FIG. 10, for an Android operating system or a HarmonyOS operating system, an NFC-based service execution process can include execution bodies such as a terminal device operating system, a target application, and a target application server.

In one or more embodiments of this specification, the terminal device operating system acquires a URL by using an NFC near field communication way, determines a target application corresponding to the URL based on domain name information in the URL, determines whether the target application is already installed in the operating system, and if determining that the target application is not installed in the operating system, opens, by using a browser included in the operating system, an application download page corresponding to the URL, where the application download page displays a download request control, and downloads the target application after acquiring a trigger operation of a user on the download request control; or if determining that the target application is already installed in the operating system, calls the target application, and sends the URL to the target application, where the URL includes service parameter information, and the service parameter information includes scenario type information and an information identifier corresponding to the scenario type information.

After acquiring the URL, the target application pre-generates, through query, a mapping relationship table based on the scenario type information in the URL, identifies a URL template that has a mapping relationship with the scenario type information, and replaces a replaceable mark in the identified URL template with the information identifier corresponding to the scenario type information, to obtain a service URL. Based on rendering parameter information in the service URL, a first application page (an App calling landing page) is generated, where the first application page includes a predetermined control. After acquiring a trigger operation of the user on the predetermined control, the target application sends a service request that includes the information identifier to the application server.

After receiving the service request sent by the target application, the target application server obtains through query based on an analysis operation of the information identifier included in the service request, service description information corresponding to the information identifier, then determines service processing result information based on the service description information, and sends the service processing result information to the target application, to enable the target application to display a second application page based on the service processing result information.

It is worthwhile to note that for some other operating systems, such as an iOS version 13 and below, after determining the target application based on the domain name information in the URL, the terminal device operating system can further display pop-up information, to provide a prompt indicating to the user whether to open the target application, and only after acquiring a trigger operation of the user on the pop-up information, performs an operation of determining whether the target application is already installed in the operating system.

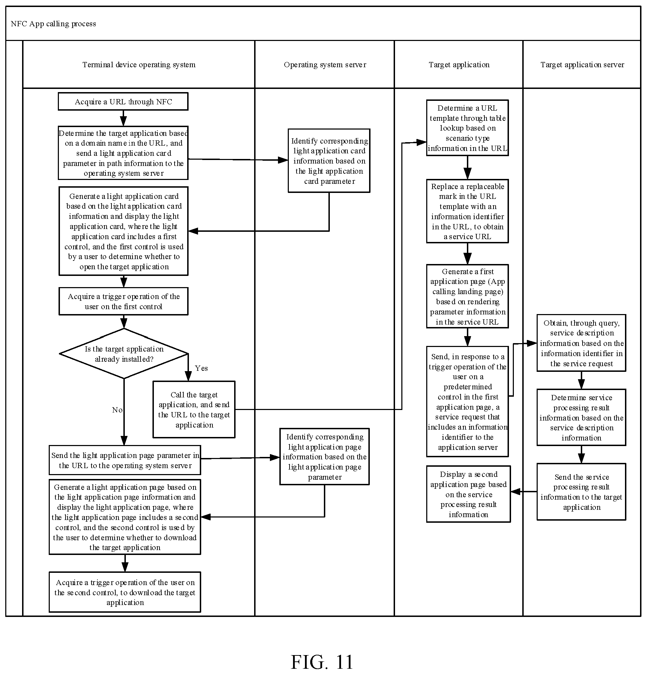

As shown in FIG. 11, for an operating system of an iOS version 14 and above, an NFC-based service execution process can include execution bodies such as a terminal device operating system, an operating system server, a target application, and a target application server.

In one or more embodiments of this specification, the terminal device operating system acquires a URL in a near field communication (NFC) way, determines a target application corresponding to the URL based on domain name information in the URL, and sends a light application card parameter included in path information in the URL to the operating system server. The operating system server identifies corresponding light application card information based on a received light application card parameter, where the light application card information is related information pre-registered by a developer of the target application at the operating system server. After acquiring the light application card information identified by the operating system server, the operating system generates a light application card based on the light application card information and displays the light application card to the user, where the light application card includes a first control, and the first control is used to provide a prompt indicating to the user whether the user needs to open the target application. If the operating system acquires a trigger operation of the user on the first control, the operating system starts an operation of determining whether the target application is already installed in the operating system. If determining that the target application is not installed in the operating system, the operating system sends a light application page parameter included in query parameter information of the URL to the operating system server, and the operating system server identifies corresponding light application page information based on a received light application page parameter, where the light application page information is related information pre-registered by a developer of the target application at the operating system server. After acquiring the light application page information identified by the operating system server, the operating system generates a light application page based on the light application page information and displays the light application page to the user, where the light application page includes a second control, and the second control is used to provide a prompt indicating to the user whether the user needs to download the target application. The target application is downloaded after a trigger operation of the user on the second control is acquired. if determining that the target application is already installed in the operating system, calls the target application, and sends the URL to the target application, where the URL includes service parameter information, and the service parameter information includes scenario type information and an information identifier corresponding to the scenario type information.

After acquiring the URL, the target application pre-generates, through query, a mapping relationship table based on the scenario type information in the URL, identifies a URL template that has a mapping relationship with the scenario type information, and replaces a replaceable mark in the identified URL template with the information identifier corresponding to the scenario type information, to obtain a service URL. Based on rendering parameter information in the service URL, a first application page (an App calling landing page) is generated, where the first application page includes a predetermined control. After acquiring a trigger operation of the user on the predetermined control, the target application sends a service request that includes the information identifier to the application server.

After receiving the service request sent by the target application, the target application server obtains through query based on an analysis operation of the information identifier included in the service request, service description information corresponding to the information identifier, then determines service processing result information based on the service description information, and sends the service processing result information to the target application, to enable the target application to display a second application page based on the service processing result information.

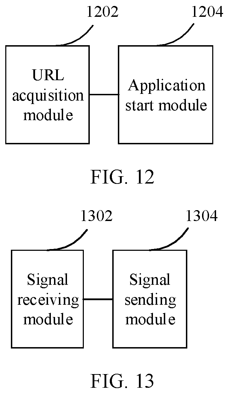

Based on the same idea, one or more embodiments of this specification further provide apparatuses corresponding to the above-mentioned methods. FIG. 12 is a schematic diagram illustrating a structure of an NFC-based service execution apparatus corresponding to FIG. 2, according to one or more embodiments of this specification. As shown in FIG. 12, the apparatus can include: a URL acquisition module 1202, configured to acquire, in a near field communication way, a uniform resource locator URL provided by an NFC tag device, where the URL includes protocol type information, domain name information, and a light application card parameter, the protocol type information represents that the URL conforms to a hypertext transfer protocol secure, and the light application card parameter is used to be recognized by an iOS operating system in a light application card way;
and an application start module 1204, configured to start an application corresponding to the domain name information, where the application is used to execute a service process corresponding to the URL.

Based on the apparatus in FIG. 12, one or more embodiments of this specification further provide some specific implementation solutions of the apparatus, as described below.

Optionally, the application start module 1204 can specifically include: an application determining unit, configured to determine, based on the domain name information, an application corresponding to the URL;
an application judgment unit, configured to determine whether the application is already installed in the operating system, to obtain a determining result;
and an application start unit, configured to start the application if the determining result represents that the application is already installed in the operating system.

Optionally, the application start module 1204 can further include: a first predetermined page information acquisition unit, configured to acquire, based on the URL if the determining result represents that the application is not installed in the operating system, first predetermined page information corresponding to the URL from an application server of the application;
and a first predetermined page display unit, configured to display a first predetermined page generated based on the first predetermined page information, where the first predetermined page includes a first download control used to provide a prompt indicating a user to download the application.

Optionally, the application start module 1204 can further include: a page element display unit, configured to display a banner page element, where the banner page element includes information used to provide a prompt indicating to access the application; and acquire a first trigger operation of the user on the banner page element.

Optionally, the application judgment unit can specifically include: a first application judgment subunit, configured to determine, in response to the first trigger operation, whether the application is already installed in the operating system.

Optionally, the operating system includes an iOS operating system that has a light application function. The application start module 1204 can further include: a card information acquisition unit, configured to acquire, based on the light application card parameter, light application card information corresponding to the light application card parameter;
a card display unit, configured to display a light application card generated based on the light application card information, where the light application card includes an application access control, and the application access control is used to provide a prompt indicating the user to access the application;
and a trigger operation acquisition unit, configured to acquire a second trigger operation on the application access control.

Optionally, the application judgment unit can specifically include: a second application judgment subunit, configured to determine, in response to the second trigger operation, whether the application is already installed in the operating system.

Optionally, the URL further includes a light application page parameter.

Optionally, the application start module 1204 can further include: a light application page information acquisition unit, configured to acquire, based on the light application page parameter if the determining result represents that the application is not installed in the operating system, light application page information corresponding to the light application page parameter;
and a light application page display unit, configured to display, in a light application corresponding to the light application card, a light application page generated based on the light application page information, where the light application page includes a second download control used to provide a prompt indicating the user to download the application.

Optionally, the light application page further includes a service control used to indicate to execute the service process.

Optionally, the application start module 1204 can further include: a third trigger operation acquisition unit, configured to acquire a third trigger operation of the user on the service control;
and a second download control display unit, configured to highlight the second download control in response to the third trigger operation.

Optionally, the application start module 1204 can further include: a URL transmission unit, configured to transmit the URL to the application, where the URL further includes service parameter information, and the service parameter information is used as a basis used by the application to execute the service process corresponding to the URL.

Optionally, the service parameter information includes scenario type information and an information identifier corresponding to the scenario type information, and the information identifier is used as a basis for querying service description information.

Optionally, the application start module 1204 can further include: a URL template query unit, configured to query, by the application based on the scenario type information, a URL template that has a mapping relationship with the scenario type information, where the URL template includes a replaceable marker, and the replaceable marker is used to identify a location in which the information identifier can be entered;
a replaceable marker replacement unit, configured to replace the replaceable marker with the information identifier, to obtain a service URL that includes the information identifier;
and a service process execution unit, configured to execute the service process based on the service URL.

Optionally, the service URL includes rendering parameter information used to render a first application page, where the information identifier is included in the rendering parameter information; and the service process execution unit can specifically include: a rendering subunit, configured to render the first application page based on the rendering parameter information.

Optionally, the first application page includes a predetermined control; and the service process execution unit can further include: a service request sending subunit, configured to send a service request to the application server of the application in response to a trigger operation of the user on the predetermined control, where the service request includes the information identifier;
a service processing result information receiving subunit, configured to receive service processing result information determined by the application server in response to the service request, where the service processing result information is determined by the application server based on the service description information, and the service description information is obtained through query by the application server based on the information identifier;
and a second application page display subunit, configured to display a second application page generated based on the service processing result information.

Optionally, the service parameter information further includes amount information corresponding to the scenario type information, the amount information is included in the rendering parameter information after being spliced with the information identifier, and the first application page further includes a payment amount corresponding to the amount information.

Optionally, the application start module 1204 can further include: a home page URL acquisition unit, configured to acquire a home page URL of the application if the URL template that has the mapping relationship with the scenario type information is not identified;
and a home page display unit, configured to display a home page of the application based on the home page URL.

Optionally, the service parameter information includes scenario type information and a specified service URL corresponding to the scenario type information.

Optionally, the application start module 1204 can further include: a specified page information acquisition unit, configured to: when a value of the scenario type information is a specified parameter, acquire, by the application based on the specified service URL, specified page information corresponding to the specified service URL from a specified server corresponding to the specified service URL;
and a specified page display unit, configured to display a specified page generated based on the specified page information.

Optionally, the application includes a payment application and the service process includes a payment process.

FIG. 13 is a schematic diagram illustrating a structure of an NFC-based service execution apparatus corresponding to FIG. 9, according to one or more embodiments of this specification. As shown in FIG. 13, the apparatus can include: a signal receiving module 1302, configured to receive a near field communication signal transmitted by a user terminal device;
and an information sending module 1304, configured to: in response to the near field communication signal, send a uniform resource locator URL to the user terminal device in a near field communication way, where the URL includes protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, where the application is used to execute a service process corresponding to the URL.

Based on the apparatus in FIG. 13, one or more embodiments of this specification further provide some specific implementation solutions of the apparatus, as described below.

Optionally, the apparatus in FIG. 13 can further include: a trigger operation acquisition module, configured to acquire a predetermined trigger operation;
a first service information acquisition module, configured to acquire first service information in response to the trigger operation;
a URL acquisition request sending module, configured to send a URL acquisition request to an application server, where the URL acquisition request includes the first service information;
and a URL receiving module, configured to receive the URL returned by the application server, where the URL includes an information identifier, the information identifier is used to query service description information, the service description information includes the first service information and second service information, and the second service information includes information that is acquired by the application server and that is related to a service that corresponds to the first URL.

Optionally, the trigger operation includes an initiate payment collection operation, the application includes a payment application, and the service process includes a payment process.

Based on the same idea, one or more embodiments of this specification further provide devices corresponding to the above-mentioned methods.

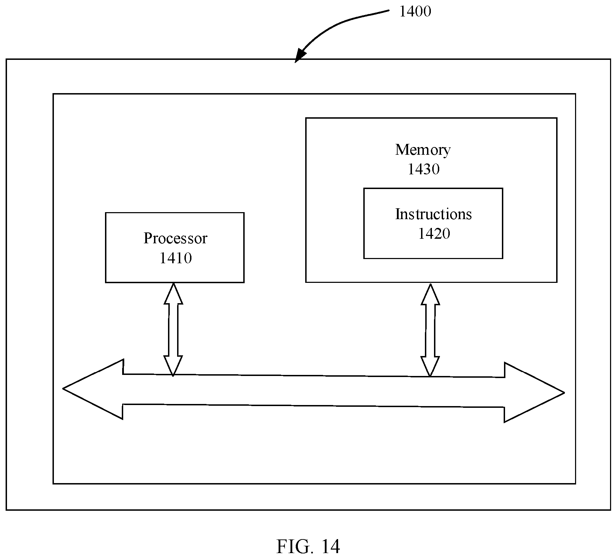

FIG. 14 is a schematic diagram illustrating a structure of a user terminal corresponding to FIG. 2, according to one or more embodiments of this specification. As shown in FIG. 14, a device 1400 can include: at least one processor 1410, and a memory 1430 communicatively connected to the at least one processor.
The memory 1430 stores instructions 1420 that can be executed by the at least one processor 1410, and the instructions are executed by the at least one processor 1410, so that the at least one processor 1410 can: acquire, in a near field communication way, a uniform resource locator URL provided by an NFC tag device, where the URL includes protocol type information, domain name information, and a light application card parameter, the protocol type information represents that the URL conforms to a hypertext transfer protocol secure, and the light application card parameter is used to be recognized by an iOS operating system in a light application card way; and start an application corresponding to the domain name information, where the application is used to execute a service process corresponding to the URL.

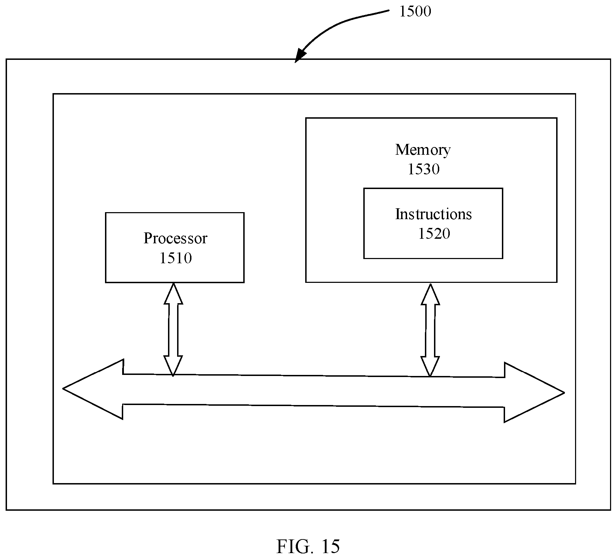

FIG. 15 is a schematic diagram illustrating a structure of an NFC tag device corresponding to FIG. 9, according to one or more embodiments of this specification. As shown in FIG. 15, a device 1500 can include: at least one processor 1510, and a memory 1530 communicatively connected to the at least one processor.
The memory 1530 stores instructions 1520 that can be executed by the at least one processor 1510, and the instructions are executed by the at least one processor 1510, so that the at least one processor 1510 can: receive a near field communication signal transmitted by a user terminal device;
and in response to the near field communication signal, send a uniform resource locator URL to the user terminal device in a near field communication way, where the URL includes protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, where the application is used to execute a service process corresponding to the URL.

Specific embodiments of this specification are described above. Other embodiments fall within the scope of the appended claims. In some cases, the actions or steps described in the claims can be performed in an order different from that in the embodiments, and the desired results can still be achieved. In addition, processes described in the accompanying drawings do not necessarily need a specific order or a sequential order shown to achieve the desired results. In some implementations, multi-tasking and concurrent processing are feasible or may be advantageous.

The embodiments of this specification are described in a progressive way. For same or similar parts in the embodiments, reference may be made to each other. Each embodiment focuses on a difference from another embodiment. Particularly, the embodiments of the devices shown in FIG. 14 and FIG. 15 are basically similar to the method embodiments, and therefore are described briefly. For related parts, references can be made to related descriptions in the method embodiments.

In the 1990s, whether a technical improvement is a hardware improvement (for example, an improvement to a circuit structure such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit to obtain a corresponding hardware circuit structure. Therefore, a method procedure can be improved using a hardware entity module. For example, a programmable logic device (PLD) (for example, a field programmable gate array (FPGA)) is such an integrated circuit, and a logical function of the programmable logic device is determined by a user through device programming. The designer independently performs programming to "integrate" a digital system to a PLD without requesting a chip manufacturer to design and manufacture an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Comell University Programming Language (CUPL), HDCal, the Java Hardware Description Language (JHDL), Lava, Lola, MyHDL, PALASM, and the Ruby Hardware Description Language (RHDL). The very-highspeed integrated circuit hardware description language (VHDL) and Verilog are most commonly used. A person skilled in the art should also understand that a hardware circuit that implements a logical method procedure can be readily obtained once the method procedure is logically programmed by using the above-mentioned several described hardware description languages and is programmed into an integrated circuit.

A controller can be implemented by using any appropriate method. For example, the controller may be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using the computer-readable program code, logic programming can be performed on method steps to allow the controller to implement the same function in forms of the logic gate, the switch, the application-specific integrated circuit, the programmable logic controller, and the built-in microcontroller. Therefore, the controller can be considered as a hardware component, and an apparatus configured to implement various functions in the controller can also be considered as a structure in the hardware component. Alternatively, the apparatus configured to implement various functions can even be considered as both a software module implementing the method and a structure in the hardware component.

The system, apparatus, module, or unit illustrated in the foregoing embodiments can be implemented by using a computer chip or an entity, or can be implemented by using a product having a specific function. A typical implementation device is a computer. Specifically, for example, the computer may be a personal computer, a laptop computer, a cellular phone, a camera phone, a smart phone, a personal digital assistant, a media player, a navigation device, an e-mail device, a game console, a tablet computer, a wearable device, or any combination of these devices.

For ease of description, the above-mentioned apparatus is described by dividing functions into various units. Certainly, when this application is implemented, the functions of the units can be implemented in one or more pieces of software and/or hardware.

A person skilled in the art should understand that some embodiments of this application can be provided as a method, a system, or a computer program product. Therefore, this application can use a form of hardware only embodiments, software only embodiments, or embodiments with a combination of software and hardware. Further, this application can use a form of a computer program product implemented on one or more computer-usable storage media (including but not limited to a disk memory, a CD-ROM, and an optical memory) containing computer-usable program code.

This application is described with reference to the flowcharts and/or block diagrams of the method, the device (system), and the computer program product according to some embodiments of this application. It should be understood that each process and/or each block in the flowcharts and/or the block diagrams and a combination of a process and/or a block in the flowcharts and/or block diagrams can be implemented by computer program instructions. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

These computer program instructions can be stored in a computer-readable memory that can instruct the computer or the another programmable data processing device to work in a specific way, so the instructions stored in the computer-readable memory generate an artifact that includes an instruction apparatus. The instruction apparatus implements a specific function in one or more processes in the flowcharts and/or in one or more blocks in the block diagrams.

These computer program instructions can alternatively be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPUs), an input/output interface, a network interface, and a memory.

The memory may include a non-persistent memory, a random access memory (RAM), a non-volatile memory, and/or another form that are in a computer-readable medium, for example, a read-only memory (ROM) or a flash memory (flash RAM). The memory is an example of the computer-readable medium.

The computer-readable medium includes a persistent and non-persistent, removable and non-removable medium, and can implement information storage by using any method or technology. Information can be a computer-readable instruction, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. Based on the definition in this specification, the computer-readable medium does not include transitory media such as a modulated data signal and carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ... " does not preclude the presence of additional identical elements in the process, method, product, or device that includes the element.

A person skilled in the art should understand that the embodiments of this application can be provided as methods, systems, or computer program products. Therefore, this application can use a form of hardware only embodiments, software only embodiments, or embodiments with a combination of software and hardware. In addition, this application can use a form of a computer program product that is implemented on one or more computer-usable storage media (including but not limited to a magnetic disk memory, a CD-ROM, an optical memory, and the like) that include computer-usable program code.

This application can be described in the general context of computer-executable instructions, for example, a program module. Generally, the program module includes a routine, a program, an object, a component, a data structure, and the like executing a specific task or implementing a specific abstract data type. This application can alternatively be practiced in distributed computing environments in which tasks are performed by remote processing devices that are connected through a communication network. In a distributed computing environment, the program module can be located in both local and remote computer storage media including storage devices.

The foregoing descriptions are merely some embodiments of this application, and are not intended to limit this application. A person skilled in the art can make various changes and variations to this application. Any modification, equivalent replacement, or improvement made without departing from the spirit and principle of this application shall fall within the scope of the claims in this application.
1. An NFC-based service execution method, applied to a user terminal device and comprising:
   acquiring, by an operating system in a near field communication way, a uniform resource locator URL provided by an NFC tag device, wherein the URL comprises protocol type information, domain name information, and a light application card parameter, the protocol type information represents that the URL conforms to a hypertext transfer protocol secure, and the light application card parameter is used to be recognized by an iOS operating system in a light application card way; and
   starting an application corresponding to the domain name information, wherein the application is used to execute a service process corresponding to the URL.
2. The method according to example 1, wherein the starting an application corresponding to the domain name information specifically comprises:
   determining the application corresponding to the URL based on the domain name information;
   determining whether the application is already installed in the operating system, to obtain a determining result; and
   starting the application if the determining result represents that the application is already installed in the operating system.
3. The method according to example 2, wherein after the determining whether the application is already installed in the operating system, to obtain a determining result, the method further comprises:
   acquiring, from an application server of the application based on the URL if the determining result represents that the application is not installed in the operating system, first predetermined page information corresponding to the URL; and
   displaying a first predetermined page generated based on the first predetermined page information, wherein the first predetermined page comprises a first download control used to provide a prompt indicating a user to download the application.
4. The method according to example 2, wherein before the determining whether the application is already installed in the operating system, the method further comprises:
   displaying a banner page element, wherein the banner page element comprises information used to provide a prompt indicating to access the application; and
   acquiring a first trigger operation of a user on the banner page element; and
   the determining whether the application is already installed in the operating system specifically comprises:
      in response to the first trigger operation, determining whether the application is already installed in the operating system.
5. The method according to example 2, wherein the operating system comprises an iOS operating system that has a light application function; and before the determining whether the application is already installed in the operating system, the method further comprises:
   acquiring, based on the light application card parameter, light application card information corresponding to the light application card parameter;
   displaying a light application card generated based on the light application card information, wherein the light application card comprises an application access control, and the application access control is used to provide a prompt indicating a user to access the application; and
   acquiring a second trigger operation on the application access control; and
   the determining whether the application is already installed in the operating system specifically comprises:
      in response to the second trigger operation, determining whether the application is already installed in the operating system.
6. The method according to example 5, wherein the URL further comprises a light application page parameter; and after the determining whether the application is already installed in the operating system, the method further comprises:
   acquiring, based on the light application page parameter if the determining result represents that the application is not installed in the operating system, light application page information corresponding to the light application page parameter; and
   in a light application corresponding to the light application card, displaying a light application page generated based on the light application page information, wherein the light application page comprises a second download control used to provide a prompt indicating the user to download the application.
7. The method according to example 6, wherein the light application page further comprises a service control used to indicate to execute the service process; and
   after the displaying a light application page generated based on the light application page information, the method further comprises:
   acquiring a third trigger operation of the user on the service control; and
   highlighting the second download control in response to the third trigger operation.
8. The method according to example 1, wherein after the starting an application corresponding to the domain name information, the method further comprises:
   transmitting the URL to the application, wherein the URL further comprises service parameter information, and the service parameter information is used as a basis used by the application to execute the service process corresponding to the URL.
9. The method according to example 8, wherein the service parameter information comprises scenario type information and an information identifier corresponding to the scenario type information, and the information identifier is used as a basis for querying service description information; and after the transmitting the URL to the application, the method further comprises:
   querying, by the application based on the scenario type information, a URL template that has a mapping relationship with the scenario type information, wherein the URL template comprises a replaceable mark, and the replaceable mark is used to identify a location in which the information identifier can be entered;
   replacing the replaceable mark with the information identifier, to obtain a service URL that comprises the information identifier; and
   performing the service process based on the service URL.
10. The method according to example 9, wherein the service URL comprises rendering parameter information used to render a first application page, and the information identifier is comprised in the rendering parameter information; and the performing the service process based on the service URL specifically comprises:
   rendering the first application page based on the rendering parameter information.
11. The method according to example 10, wherein the first application page comprises a predetermined control; and after the rendering the first application page based on the rendering parameter information, the method further comprises:
   sending a service request to an application server of the application in response to a trigger operation of a user on the predetermined control, wherein the service request comprises the information identifier;
   receiving service processing result information determined by the application server in response to the service request, wherein the service processing result information is determined by the application server based on the service description information, and the service description information is obtained through query by the application server based on the information identifier; and
   displaying a second application page generated based on the service processing result information.
12. The method according to example 10, wherein the service parameter information further comprises amount information corresponding to the scenario type information, the amount information is comprised in the rendering parameter information after being spliced with the information identifier, and the first application page further comprises a payment amount corresponding to the amount information.
13. The method according to example 9, after the querying, by the application based on the scenario type information, a URL template that has a mapping relationship with the scenario type information, the method further comprises:
   acquiring a home page URL of the application if the URL template that has the mapping relationship with the scenario type information is not identified; and
   displaying a home page of the application based on the home page URL.
14. The method according to example 8, wherein the service parameter information comprises scenario type information and a specified service URL corresponding to the scenario type information; and after the transmitting the URL to the application, the method further comprises:
   when a value of the scenario type information is a specified parameter, acquiring, by the application based on the specified service URL, specified page information corresponding to the specified service URL from a specified server corresponding to the specified service URL; and
   displaying a specified page generated based on the specified page information.
15. The method according to any one of examples 1 to 14, wherein the application comprises a payment application, and the service process comprises a payment process.
16. An NFC-based service execution method, applied to an NFC tag device and comprising:
   receiving a near field communication signal transmitted by a user terminal device; and
   in response to the near field communication signal, sending a uniform resource locator URL to the user terminal device in a near field communication way, wherein the URL comprises protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, wherein the application is used to execute a service process corresponding to the URL.
17. The method according to example 16, wherein before the receiving a near field communication signal transmitted by a user terminal device, the method further comprises:
   acquiring a predetermined trigger operation;
   acquiring first service information in response to the trigger operation;
   sending a URL acquisition request to an application server, wherein the URL acquisition request comprises the first service information; and
   receiving the URL returned by the application server, wherein the URL comprises an information identifier, the information identifier is used to query service description information, the service description information comprises the first service information and second service information, and the second service information comprises information that is acquired by the application server and that is related to a service that corresponds to the URL.
18. The method according to example 16 or 17, wherein the trigger operation comprises an initiate payment collection operation, the application comprises a payment application, and the service process comprises a payment process.
19. An NFC-based service execution apparatus, applied to a user terminal device and comprising:
   a URL acquisition module, configured to acquire, in a near field communication way, a uniform resource locator URL provided by an NFC tag device, wherein the URL comprises protocol type information, domain name information, and a light application card parameter, the protocol type information represents that the URL conforms to a hypertext transfer protocol secure, and the light application card parameter is used to be recognized by an iOS operating system in a light application card way; and
   an application start module, configured to start an application corresponding to the domain name information, wherein the application is used to execute a service process corresponding to the URL.
20. An NFC-based service execution apparatus, applied to an NFC tag device and comprising:
   a signal receiving module, configured to receive a near field communication signal transmitted by a user terminal device; and
   an information sending module, configured to: in response to the near field communication signal, send a uniform resource locator URL to the user terminal device in a near field communication way, wherein the URL comprises protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, wherein the application is used to execute a service process corresponding to the URL.
21. A user terminal device, comprising:
   at least one processor; and
   a memory communicatively connected to the at least one processor, wherein
   the memory stores instructions that can be executed by the at least one processor, and the instructions are executed by the at least one processor, so that the at least one processor can:
      acquire, in a near field communication way, a uniform resource locator URL provided by an NFC tag device, wherein the URL comprises protocol type information, domain name information, and a light application card parameter, the protocol type information represents that the URL conforms to a hypertext transfer protocol secure, and the light application card parameter is used to be recognized by an iOS operating system in a light application card way; and
      start an application corresponding to the domain name information, wherein the application is used to execute a service process corresponding to the URL.
22. An NFC tag device, comprising:
   at least one processor; and
   a memory communicatively connected to the at least one processor, wherein
   the memory stores instructions that can be executed by the at least one processor, and the instructions are executed by the at least one processor, so that the at least one processor can:
      receive a near field communication signal transmitted by a user terminal device; and
      in response to the near field communication signal, send a uniform resource locator URL to the user terminal device in a near field communication way, wherein the URL comprises protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, wherein the application is used to execute a service process corresponding to the URL.

## Claims

1. A method for near field communication, NFC, -based service execution, the method performed by a user terminal device and comprising:
acquiring (202), by an operating system in an NFC way, a uniform resource locator, URL, provided by an NFC tag device, wherein the URL comprises protocol type information, domain name information, and a light application card parameter, the protocol type information represents that the URL conforms to a hypertext transfer protocol secure, and the light application card parameter is used to be recognized by an iOS operating system in a light application card way; and
starting (204) an application corresponding to the domain name information, wherein the application is used to execute a service process corresponding to the URL.

2. The method according to claim 1, wherein starting (204) an application corresponding to the domain name information comprises:
determining the application corresponding to the URL based on the domain name information;
determining whether the application is already installed in the operating system, to obtain a determining result; and
starting the application if the determining result represents that the application is already installed in the operating system.

3. The method according to claim 2, wherein, after determining whether the application is already installed in the operating system, to obtain a determining result, the method further comprises:
acquiring, from an application server of the application based on the URL if the determining result represents that the application is not installed in the operating system, first predetermined page information corresponding to the URL; and
displaying a first predetermined page generated based on the first predetermined page information, wherein the first predetermined page comprises a first download control used to provide a prompt indicating a user to download the application.

4. The method according to claim 2, wherein, before determining whether the application is already installed in the operating system, the method further comprises:
displaying a banner page element, wherein the banner page element comprises information used to provide a prompt indicating to access the application; and
acquiring a first trigger operation of a user on the banner page element; and
determining whether the application is already installed in the operating system comprises:
in response to the first trigger operation, determining whether the application is already installed in the operating system.

5. The method according to claim 2, wherein the operating system comprises an iOS operating system that has a light application function; and before determining whether the application is already installed in the operating system, the method further comprises:
acquiring, based on the light application card parameter, light application card information corresponding to the light application card parameter;
displaying a light application card generated based on the light application card information, wherein the light application card comprises an application access control, and the application access control is used to provide a prompt indicating a user to access the application; and
acquiring a second trigger operation on the application access control; and
determining whether the application is already installed in the operating system comprises:
in response to the second trigger operation, determining whether the application is already installed in the operating system; optionally
wherein the URL further comprises a light application page parameter; and after determining whether the application is already installed in the operating system, the method further comprises:
acquiring, based on the light application page parameter if the determining result represents that the application is not installed in the operating system, light application page information corresponding to the light application page parameter; and
in a light application corresponding to the light application card, displaying a light application page generated based on the light application page information, wherein the light application page comprises a second download control used to provide a prompt indicating the user to download the application.; further optionally
wherein the light application page further comprises a service control used to indicate to execute the service process; and
after displaying a light application page generated based on the light application page information, the method further comprises:
acquiring a third trigger operation of the user on the service control; and
highlighting the second download control in response to the third trigger operation.

6. The method according to any one of claims 1 to 5, wherein, after starting (204) an application corresponding to the domain name information, the method further comprises:
transmitting the URL to the application, wherein the URL further comprises service parameter information, and the service parameter information is used as a basis used by the application to execute the service process corresponding to the URL.

7. The method according to claim 6, wherein the service parameter information comprises scenario type information and an information identifier corresponding to the scenario type information, and the information identifier is used as a basis for querying service description information; and after the transmitting the URL to the application, the method further comprises:
querying, by the application based on the scenario type information, a URL template that has a mapping relationship with the scenario type information, wherein the URL template comprises a replaceable mark, and the replaceable mark is used to identify a location in which the information identifier can be entered;
replacing the replaceable mark with the information identifier, to obtain a service URL that comprises the information identifier; and
performing the service process based on the service URL.

8. The method according to claim 7, wherein the service URL comprises rendering parameter information used to render a first application page, and the information identifier is comprised in the rendering parameter information; and performing the service process based on the service URL comprises:
rendering the first application page based on the rendering parameter information; optionally
wherein the first application page comprises a predetermined control; and after the rendering the first application page based on the rendering parameter information, the method further comprises:
sending a service request to an application server of the application in response to a trigger operation of a user on the predetermined control, wherein the service request comprises the information identifier;
receiving service processing result information determined by the application server in response to the service request, wherein the service processing result information is determined by the application server based on the service description information, and the service description information is obtained through query by the application server based on the information identifier; and
displaying a second application page generated based on the service processing result information; or
wherein the service parameter information further comprises amount information corresponding to the scenario type information, the amount information is comprised in the rendering parameter information after being spliced with the information identifier, and the first application page further comprises a payment amount corresponding to the amount information.

9. The method according to claim 7, wherein, after querying, by the application based on the scenario type information, a URL template that has a mapping relationship with the scenario type information, the method further comprises:
acquiring a home page URL of the application if the URL template that has the mapping relationship with the scenario type information is not identified; and
displaying a home page of the application based on the home page URL.

10. The method according to claim 6, wherein the service parameter information comprises scenario type information and a specified service URL corresponding to the scenario type information; and after transmitting the URL to the application, the method further comprises:
when a value of the scenario type information is a specified parameter, acquiring, by the application based on the specified service URL, specified page information corresponding to the specified service URL from a specified server corresponding to the specified service URL; and
displaying a specified page generated based on the specified page information.

11. The method according to any one of claims 1 to 10, wherein the application comprises a payment application, and the service process comprises a payment process.

12. A near field communication, NFC, -based service execution method, applied to an NFC tag device and comprising:
receiving (902) a near field communication signal transmitted by a user terminal device; and
in response to the near field communication signal, sending (904) a uniform resource locator, URL, to the user terminal device in a near field communication way, wherein the URL comprises protocol type information, domain name information, and a light application card parameter, the protocol type information represents that the URL conforms to a hypertext transfer protocol secure, the light application card parameter is used to be recognized by an iOS operating system in a light application card way, and the domain name information is used by the user terminal device to start an application corresponding to the domain name information, wherein the application is used to execute a service process corresponding to the URL.

13. The method according to claim 12, wherein, before receiving (902) a near field communication signal transmitted by a user terminal device, the method further comprises:
acquiring a predetermined trigger operation;
acquiring first service information in response to the trigger operation;
sending a URL acquisition request to an application server, wherein the URL acquisition request comprises the first service information; and
receiving the URL returned by the application server, wherein the URL comprises an information identifier, the information identifier is used to query service description information, the service description information comprises the first service information and second service information, and the second service information comprises information that is acquired by the application server and that is related to a service that corresponds to the URL; and/or
wherein the trigger operation comprises an initiate payment collection operation, the application comprises a payment application, and the service process comprises a payment process.

14. A user terminal device, comprising:
at least one processor; and
a memory communicatively connected to the at least one processor, wherein
the memory stores instructions that can be executed by the at least one processor, and the instructions are executed by the at least one processor, so that the at least one processor performs the method of any one of claims 1 to 11.

15. A near field communication, NFC, tag device, comprising:
at least one processor; and
a memory communicatively connected to the at least one processor, wherein
the memory stores instructions that can be executed by the at least one processor, and the instructions are executed by the at least one processor, so that the at least one processor performs the method of any one of claims 12 or 13.
